Europäisches Patentamt

European Patent Office

Office européen des brevets

(19)

(11) Veröffentlichungsnummer: **0 181 910**
B1

(12) **EUROPÄISCHE PATENTSCHRIFT**

(45) Veröffentlichungstag der Patentschrift:
26.10.88

(51) Int. Cl.4: **F 24 F 3/153**, F 24 F 3/16, F 24 F 5/00

(21) Anmeldenummer: **85902622.1**

(22) Anmeldetag: **17.05.85**

(86) Internationale Anmeldenummer:
**PCT/HU 85/00030**

(87) Internationale Veröffentlichungsnummer:
**WO 85/05436 (05.12.85 Gazette 85/26)**

(54) ENERGIESPARENDES SYSTEM ZUR HEIZUNG UND/ODER KÜHLUNG VON ANLAGEN INSBESONDERE VON VIEHZUCHTANLAGEN, BESTEHEND AUS ZUM AUFENTHALT VON ZAHLREICHEN LEBEWESEN GEEIGNETEN RÄUMEN.

(30) Priorität: **18.05.84 HU 191284**

(43) Veröffentlichungstag der Anmeldung:
**28.05.86 Patentblatt 86/22**

(45) Bekanntmachung des Hinweises auf die Patenterteilung:
**26.10.88 Patentblatt 88/43**

(84) Benannte Vertragsstaaten:
**AT CH DE FR GB LI NL SE**

(56) Entgegenhaltungen:
**WO - A - 80/00486**
**CH - A - 219 080**

(73) Patentinhaber: **INNOFINANCE Altalános Innováciòs Pénzintézet, Szabadság tér 5-6, H-1054 Budapest V (HU)**

(72) Erfinder: **GUOTH, János, Sziklai Sándor u. 66., H-2045 Törökbálint (HU)**
Erfinder: **VARGA, Agnes, Radvány u. 19., H-1118 Budapest (HU)**

(74) Vertreter: **Patentanwälte Viering & Jentschura, Steinsdorfstrasse 6, D-8000 München 22 (DE)**

## Beschreibung

Die Erfindung betrifft ein energiesparendes System zum Heizen oder Kühlen eines Stallsystems, insbesondere eines Stallsystems für Viehzuchtanlagen, welches aus mehreren Räumen für die Unterbringung zahlreicher Tiere besteht, zur Minderung der Ausbreitungswahrscheinlichkeit von Infektionskrankheiten der Tiere in den verschiedenen Räumen.

Bekanntlich ist das Entstehen einer Abluftatmosphäre in den Räumen für die Unterbringung zahlreicher Tiere eine Folge des durch die Lebewesen ausgeatmeten Kohlendioxids und der Erhöhung des Feuchtigkeitsgehaltes. Dazu kommen ausserdem die in Räumen mit darin untergebrachten Tieren im Zuge des Zerfalls der Fäkalien entstehenden Gase und Dünste. Die Beseitigung des Dunstes wurde früher ausschliesslich durch einen Luftaustausch (durch natürliche oder künstliche Belüftung) erreicht. Die zugeführte Frischluft musste im Winter aufgeheizt werden. Im Wesentlichen muss aber der Grossteil der Heizenergie zum Aufheizen der Frischluft aufgewandt werden, während der Wärmegehalt der in die freie Atmosphäre geführten Luft verlorengeht.

Bekannt sind Systeme, mit denen zwischen der zugeführten und der weggeleiteten Luft ein Wärmeaustausch vorgenommen und so der Heizenergieverbrauch um 15–30% vermindert wird. Diese Methode ist aber thermodynamisch nicht effektiv genug, da der Wärmeaustausch auf dem niedrigen Temperaturniveau der zur Ableitung gelangenden Luft erfolgt.

Bekannt ist auch eine Lösung, beschrieben in der HU-PS 174 791, nach welcher de im Gebäude entstehende Wasserdampf (Dunst) nicht durch Belüftung, sondern durch Kondensation entfernt wird. Der Wärmeenergiegehalt des Wasserdampfes (Dunstes) beträgt nämlich ca. 2350–2500 kJ/kg. Nach einer anderen Patentschrift, der HU-PS 182 321 wird zur Kondensation eine Wärmepumpe eingesetzt, mit deren Hilfe der Wärmegehalt des Wasserdampfes (Dunstes) auf einem wirksamen Temperaturniveau genutzt werden kann. Dieses System erfordert demgemäss nur eine Frischluftmenge, die zum Entfernen der verunreinigenden Gase erforderlich ist. Bei der Geflügelhaltung beträgt z.B. nach den derzeitigen Normativen der im Zuge des Luftwechsels nötige Frischluftbedarf im Winter 2,5–4 $m^3$/kg Lebendgewicht/h, wogegen bei der Wasserdampfkondensationslösung die Frischluftzufuhr auf 0,3–0,5 $m^3$/kg Lebendgewicht/h zurückgeht. Erfahrungsgemäss wird mit dem Wasserdampf (Dunst) zusammen auch ein Teil der verunreinigenden Gase kondensiert. Es kann nachgewiesen werden, dass mit dieser Methode der nötige Primärenergiebedarf in Abhängigkeit von der Tierart um 60–75% herabgesetzt werden kann. Das Wasserdampfkondensationssystem wird im Sommer angewandt, und hierbei wird die Innentemperatur des Raumes durch Kühlung ertragbar gemacht, sodass die Produktionsergebnisse auf der Ebene der optimalen Werte gehalten werden können.

Eine weitere Energieeinsparung kann erreicht werden, wenn zur Beseitigung der Zersetzungsgase bzw. zur Verminderung ihres Anteiles in der Luft des betreffenden Raumes eine geeignete Lösung gefunden wird. Eine derartige Methode beschreibt die ungarische Patentanmeldung Nr. 1 228/84, nach der ein bedeutender Teil der verunreinigenden Abgase durch chemische Filtrierung entfernt wird. Die so erhaltene wasserdampfarme, einen vernachlässigbar geringen Abgasgehalt aufweisende, jedoch warme, eine Temperatur von 20–26 °C aufweisende reine Luft kann dann in den Raum wieder rezirkuliert werden.

Mit Hilfe der vorgenannten Lösungen kann die erforderliche Frischluftmenge in einem wesentlichen Masse vermindert, jedoch auf sie nicht ganz verzichtet werden. Der ideale Zustand wäre, wenn nur der Sauerstoffbedarf von aussen zugeführt werden müsste. Auch die in verminderter Menge in den Raum zugeführte Luft enthält noch immer mehr Sauerstoff als dies zur Atmung der Tiere erforderlich wäre.

Die Frage der Wirtschaftlichkeit bei der Geflügelhaltung bedingte in der letzten Zeit neben der Energiesparsamkeit auch die Lösung anderer Probleme. Eine derartige Sorge ist, dass wegen der Infektionsgefahr die verschiedenen Altersklassen gleichzeitig in der gleichen Aufzuchtanlage nicht gehalten werden können, so dass die Ausnutzung der Anlagen unwirtschaftlich wird.

Es ist auch bekannt (WO-A-80/00486) im Wesentlichen zur Konditionierung eines Tierzuchtgebäudes, z.B. eines Schweinestalles, im Interesse der Verminderung der Wärmeverluste aus der im Stallraum verbrauchten Luft die Gase auszuwaschen, die Brüde zu kondensieren und dann die Luft einer biologischen Filtrierung zu unterwerfen. Die so gewonnene gereinigte Luft wird teilweise in den Stall zurückgeführt, und teilweise in anderen Gebäuden, z.B. in Gewächshäusern, unter Ausnutzung ihrer Abfallwärme verwertet. Die Ausnutzung der Abfallwärme erfolgt mit Hilfe einer Wärmepumpe.

Das primäre Ziel dieser Methode ist die Entgasung und Entkeimung der verbrauchten Luft im Interesse ihrer Zurückführung. Aus diesem Grunde wird die verschmutzte Luft durch die Zugabe von frischer Luft, die natürlich eine gewisse Menge von Brüde enthält, zuerst abgekühlt und damit wird auch eine gewisse Menge Brüde kondensiert (nach dem Beispiel auf Seite 6, letzter Absatz, der Druckschrift stammt 1/3 des täglich anfallenden Kondensats von 900 l aus diesem Prozess). Diese Menge geht hinsichtlich der Wärmerückgewinnung verloren. In der Gaswaschanlage gelangt teilweise schon abgekühlte Brüde in den Brüdenkondensator, wodurch auch der dort gewinnbare Wärmeinhalt wesentlich geringer ist als der Wärmeinhalt der den Tierzuchtraum verlassenden Brüde. Die das Gemisch verlassende Luft wird anderswo verwertet, mit frischer Luft gemischt und dadurch wird der Wärmebedarf zur Erwärmung der frische Luft verringert. Die Anwendung dieses Systems in mehreren nebeneinander angeordneten Gebäuden hat höchstens die Zunahme der anderswo verwendbaren Wärmemenge zur Folge.

Die Erfindung hat zum Ziel, ein System zum Heizen oder Kühlen eines Stallsystems zu schaffen, das aus mehreren Räumen für die Unterbringung zahlreicher Tiere besteht, welches System eine Minderung der Ausbreitungswahrscheinlichkeit von Infektonskrankheiten der Tiere in den verschiedenen Räumen bewirkt und noch energiesparender als die bekannten Systeme arbeitet.

Die Lösung der gestellten Aufgabe sowie bevorzugte Ausgestaltungen derselben sind Gegenstand der Ansprüche.

Die Erfindung beruht auf der Erkenntnis, dass der mit der Wasserdampfkondensation verbundene Rückgang des Energiebedarfes, weiterhin der durch die Filtrierung der Verunreinigungsgase bedingte Rückgang des Frischluftbedarfs die Möglichkeit bieten, auch die biologische Filtrierung der in die Umgebungsluft ausgestossenen wesentlich geringeren Abluftmenge vorzunehmen, derzufolge die für die verschiedenen Altersklassen der Tiere gefährlichen Krankheitserreger durch die Luft nicht von einem Stallungsraum in einen anderen gelangen können, d.h. dass mehrere Altersklassen von Tieren nebeneinander aufgezogen werden können.

Die Erfindung wird detaillierter anhand der in den Figuren dargestellten Ausführungsbeispiele beschrieben, wobei

Fig. 1 ein Ausführungsbeispiel eines erfindungsgemässen energiesparsamen Anlagensystems im Falle einer aus neun Räumen bestehenden Kükenaufzuchtanlage,

Fig. 2 den Schnitt A–A eines Raumes des in Fig. 1 dargestellten erfindungsgemässen Systems,

Fig. 3 den Schnitt B–B eines Raumes des in Fig. 1 dargestellten erfindungsgemässen Systems,

Fig. 4 den Schnitt C–C eines Raumes des in Fig. 1 dargestellten erfindungsgemässen Systems,

Fig. 5 das Zeitschaubild der Kükenaufzucht in einer aus neun Räumen bestehenden Anlage,

Flg. 6 den Verlauf des Heizwärmebedarfes bei dem herkömmlichen und dem erfindungsgemässen energiesparsamen System bei veränderlicher Aussentemperatur darstellt.

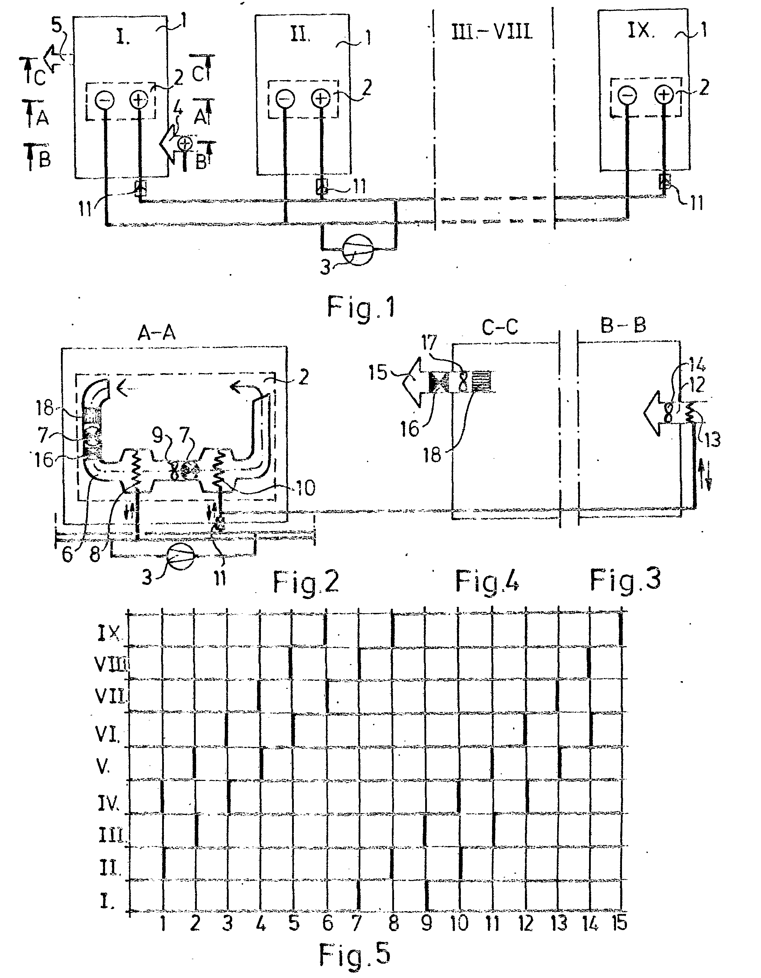

In der Aufzuchtanlage nach Fig. 1 sind mit ihren Längsachslinien parallel zueinander neun Räume 1 angeordnet. Die Grösse der Räume 1 sowie die zwischen ihnen befindlichen Abstände entsprechen im allgemeinen den üblichen Abmessungen. In den Räumen 1 sind Luftbehandlungseinheiten 2 angeordnet, die an die gemeinsame Wärmepumpe 3 der Luftbehandlungseinheiten angeschlossen sind. Die Wärmepumpe ist vorteilhafterweise ausserhalb der Räume 1 angeordnet. In jedem Raum 1 ist mindestens eine, vorteilhafterweise eine Frischluftzuführungseinheit 4 und mindestens eine, vorteilhafterweise eine Luftabzugseinheit 5 in der Umgebung der einander diagonal gegenüberliegenden Ecken der Räume 1 so angeordnet, dass die Luftabzugseinheiten 5 der einzelnen Räume 1 möglichst weit von den Frischluftzuführeinheiten 4 sämtlicher übrigen Räume 1 vorgesehen sind. Nach dem in Fig. 1 dargestellten Beispiel wird dies so gelöst, dass die Frischluftzuführungseinheiten 4 jeweils in der gleichen Ecke jedes Raumes 1 und auf ähnliche Weise auch die Luftabzugseinheiten 5 in jeweils der gleichen Ecke der Räume 1 angeordnet sind.

Nach einem anderen (in Fig. nicht dargestellten) Ausführungsbeispiel sind die Frischluftzuführungseinheiten 4 in der Umgebung der einen kürzeren Seite der Räume 1 in einer Linie angeordnet, gehen jedoch nicht nach einer Richtung, sondern paarweise in Richtung zueinander. Auf ähnliche Weise gehen die Luftabzugseinheiten 5 in der Umgebung der anderen kürzeren Seite der Räume 1 paarweise in Richtung zueinander. Zufolge diagonalen Anordnung gehen nach dem Zwischenraum zwischen zwei benachbarten Räumen 1 entweder nur die Frischluftzuführungseinheiten 4 oder nur die Luftabzugseinheiten 5. Es besteht auch kein Hindernis, dass die Frischluftzuführungseinheiten 4 parallel zueinander nach einer Richtung gehend, auf der eine kürzeren Seite der Räume 1, die Luftabsaugeinheiten 5 hingegen parallel zueinander nach einer Richtung gehend auf der anderen kürzeren Seite der Räume 1 angeordnet werden. In Fig. 1 sind die Luftbehandlungseinheiten 2 nur aus zeichnungstechnischen Gründen in der Mitte der Räume 1 dargestellt. Sie können im wesentlichen innerhalb der Räume 1 beliebig angeordnet werden, wo sie die Funktionen der Räume 1 nicht hindern.

In Fig. 2, wo der Schnitt A–A von Fig. 1 zu schon ist, werden die Luftbehandlungseinheiten 2 detaillierter dargestellt. Die Luftbehandlungseinheiten 2 bestehen aus der Luftleitung 6, dem in der Luftleitung 6 angeordneten chemischen Filter 7, dem Brüdenkondensator 8, dem Ventilator 9 und der Nachheizeinheit 10. Die Brüdenkondensatoren 8 der einzelnen Luftbehandlungseinheiten 2 sind parallel zueinander an die Kühlerseite der Wärmepumpe 3, die Nachheizeinheiten 10 der Luftbehandlungseinheiten 2 parallel zueinander an die Heizseite der Wärmepumpe 3 angeschlossen. Jede einzelne Nachheizeinheit 10 ist über einen Heizregler 11 an die Wärmepumpe 3 angeschlossen, sodass die durch die Wärmepumpe 3 erzeugte Wärmemenge dem Bedarf entsprechend zwischen den Räumen 1 verteilt werden kann.

Fig. 3 veranschaulicht mit der Skizze des Schnittes B–B nach Fig. 1 die Frischluftzuführungseinheiten detaillierter. Die Frischluftzuführungseinheiten 4 bestehen aus einer an deren Luftleitung 12, einem in der anderen Luftleitung 12 vorgesehenen Vorheizer 13 und einem anderen Ventilator 14. Die Vorheizeinheiten 3 sind an die Heizseite der Wärmepumpe 3 angeschlossen.

Fig. 4 veranschaulicht skizzenartig den Schnitt C–C in Fig. 1. Die Luftabzugseinheiten 5 enthalten eine dritte Luftleitung 15, weiterhin ein in der dritten Luftleitung 15 vorgesehenes biologisches Filter 16 und einen dritten Ventilator 17. Das biologische Filter 16 besteht vorteilhafterweise aus mit keimtötender Flüssigkeit in einer an sich bekannten Weise imprägniertem bzw. durchtränktem Papier oder Textilstoff. Vor dem biologischen Filter 16 kann ein Staubscheiderfilter 18 angeordnet werden. Zweckdienlich ist übrigens ein Staubscheiderfilter 18, bestehend aus mit Humaten durchtränktem oder überzogenem Papier oder Textilstoff, auch in der Luftleitung 6 der Luftbehandlungseinheit 2 vor dem chemischen Filter 7 anzuordnen.

Das erfindungsgemässe kombinierte System funktioniert wie folgt:

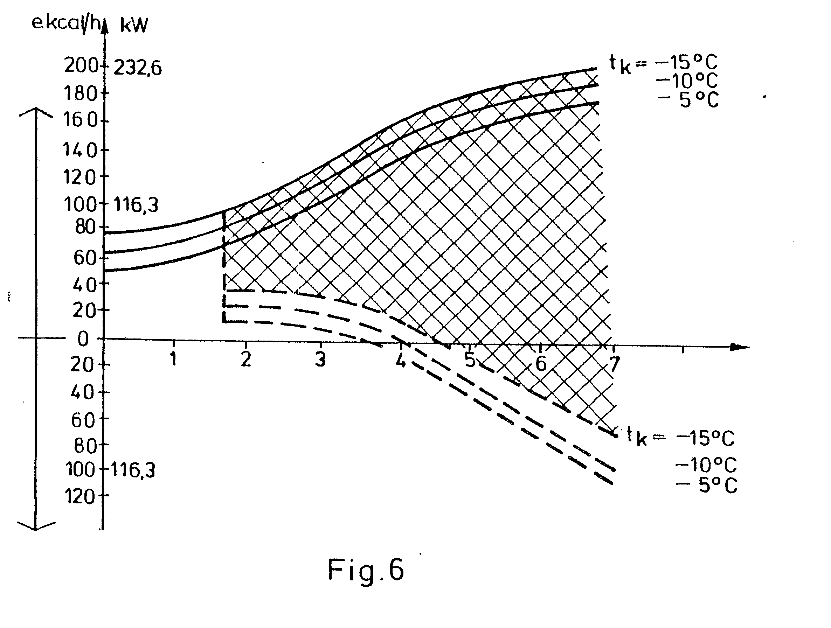

Die Luftbehandlungseinheit 2 kann den in den HU-PS 174 791 bzw. HU-PS 182 321 bekanntgegebenen Lösungen entsprechend aufgebaut werden und zur Heizung der einzelnen Räume ist eine die übliche wesentlich unterschreitende Energiemenge, weiterhin wesentlich weniger Frischluft erforderlich. Eine weitere Lufteinsparung kann dadurch erreicht werden, dass in die Luftbehandlungseinheit 2 vor der Wärmepumpe 3 das chemische Filter 7 eingebaut wird, da auf diese Weise ein weiterer Teil des Ammoniaks (der mit dem Wasserdampf noch nicht kondensiert wurde abgeschieden wird, wobei jedoch gleichzeitig auch ein Teil des im Raum entstandenen Kohlendioxyds ausgefiltert wird. Das Ausfiltern der Gase ermöglicht eine weitere Luftrezirkulation. Eine Folge der Verminderung des Frischluftbedarfes ist, dass die Anordnung einer Frischluftzuführungseinheit 4 und einer Luftabzugseinheit 5 an den beiden Enden des Raumes 1 ausreicht und dies nicht eine unzulässige Erhöhung der Luftgeschwindigkeit im Raum 1 bedeutet. Der reduzierte Luftabzug ermöglicht einen wirtschaftlichen Einsatz der biologischen Filtrierung, wodurch ohne Gefahr einer Infektion die gleichzeitige Aufzucht mehrerer Tieraltersklassen in einer Aufzuchtanlage ermöglicht wird. In Fig. 5 wird ein Diagramm dargestellt, wonach in den einzelnen Räumen 1 die Tagesküken mit einem Zeitabstand von einer Woche eingesetzt werden, nach einer Aufzucht von 7 Wochen der Stallraum entleert wird und während zwei Wochen das Aufräumen, Desinfizieren und Vorbereiten des Raumes 1 zum Empfang des nächsten Tageskükenbestandes stattfindet. Ein derartiges System ermöglicht eine gleichmässigere Auslastung der Arbeitskräfte und gleichmässigere Gestaltung der Aufzuchtbedingungen. Auch im Energieverbrauch treten keine derartigen Spitzen auf, wie bei der gleichzeitigen Aufzucht von Tieren der gleichen Altersklasse. Nach dem in Fig. 6 dargestellten Diagramm ist zur Aufzucht der Tagesküken während der ersten beiden Wochen eine bedeutende Wärmemenge erforderlich, die nur durch Heizung gesichert werden kann, soweit in sämtlichen Räumen 1 die gleiche Altersklasse vorzufinden ist. Da jedoch in Abhängigkeit von der Aussentemperatur von der vierten-fünften Woche der Aufzucht beginnend die im Raum 1 gehaltenen Tiere einen Wärmeüberschuss produzieren, kann diese Wärmemenge in dem erfindungsgemässen System in den Räumen 1 ausgenutzt werden, wo eben die ein- bzw. zweiwöchigen Tagesküken gehalten werden.

Aufgrund der in der Fachliteratur vorfindbaren Angaben kann bestimmt werden, in welchem Ausmasse die Faktoren des Mikroklimas (relativer Feuchtigkeitsgehalt, Temperatur, Luftgeschwindigkeit, Konzentration des Ammoniaks, Kohlenstoffes und der sonstigen Abgase, sowie die Staubverunreinigung) die wirtschaftliche Produktion beeinflussen, für die Kennziffern der Verendung, der Gewichtszunahme, der Futterverwertung, der Eierproduktion, des Gewichts und der Produktivität kennzeichnend sind. Es kann nachgewiesen werden, dass in dem erfindungsgemässen System der Räume 1 von den Faktoren des Mikroklimas die wichtigsten: die relative Luftfeuchtigkeit, die Temperatur, die Luftströmungsgeschwindigkeit und die Ammoniakkonzentration optimalisiert werden können und dies eine Verbesserung der Produktionskennziffern im Vergleich zum herkömmlichen Aufzuchtsystem zur Folge hat.

Die Erfindung ist keineswegs auf die in den Ausführungsbeispielen beschriebenen Lösungen beschränkt, sondern erstreckt sich auf den in den Patentansprüchen insbesondere im Hauptanspruchspunkt festgelegten vollen Umfang.

**Patentansprüche**

1. Energiesparendes System zum Heizen oder Kühlen eines Stallsystems, insbesondere eines Stallsystems für Viehzuchtanlagen, welches aus mehreren Räumen für die Unterbringung zahlreicher Tiere besteht, zur Minderung der Ausbreitungswahrscheinlichkeit von Infektionskrankheiten der Tiere in den verschiedenen Räumen, mit

1) einer in jedem Raum (1) vorhandenen Luftbehandlungseinheit (2) zur Behandlung der in den Räumen befindlichen Luft, enthaltend:

a) eine Brüdenkondensator (8) zur Kondensation der in dem Raum (1) entstehenden Brüde,

b) wenigstens einen Staubfilter (18) zur Beseitigung mechanischer Verunreinigung der Luft in dem Raum,

c) wenigstens einen chemischen Filter (7) zur Verminderung bzw. Beseitung von in dem Raum entstandenen Verunreinigungsgasen,

d) wenigstens eine Nachheizeinheit (10) zum Heizen der in dem Raum zirkulierende Luft,

2) einer in jedem Raum (1) vorhandenen Frischluftzuführungseinheit (4) für die Zufuhr von Frischluft, aus der Atmosphäre ins Innere des Raumes (1) und einer in jedem Raum (1) vorhandenen Luftabzugseinheit (5) zum Ausleiten von Luft aus dem Raum (1) in die Atmosphäre,

wobei in der Luftleitung (15) der Luftabzugseinheit (5) wenigstens ein biologischer Filter (16) zur biologischen Filterung der an die Atmosphäre abzugebenden Luft vorhanden ist, und die Brüdenkondensatoren (8) der Luftbehandlungseinheiten (2) der verschiedenen Räume (1) über die Kühlerseite wenigstens einer Wärmepumpe (3) in einen gemeinsamen Wärmeentzugskreis und die Nachheizeinheiten (10) der Luftbehandlungseinheiten (2) über die Heizseite der Wärmepumpe (3) in einen gemeinsamen Wärmeabgabekreis zusammengeschaltet sind.

2. Energiesparendes System nach Anspruch 1, dadurch gekennzeichnet, dass die biologischen Filter (16) aus einem mit keimtötender Flüssigkeit durchtränkten oder imprägnierten Filtermaterial bestehen.

3. Energiesparendes System nach einem der Ansprüche 1 bis 2, dadurch gekennzeichnet, dass der chemische Filter (7) zwischen dem Brüdenkondensator (8) und der Nachheizeinheit (10) der Luftbehandlungseinheit (2) oder hinter der Nachheizeinheit (10) angeordnet ist.

4. Energiesparendes System nach Anspruch 1 oder 2, dadurch gekennzeichnet, dass der chemische Filter ein mit Humaten getränktes oder überzogenes Filtermaterial ist.

5. Energiesparendes System nach einem der Ansprüche 1 bis 4, dadurch gekennzeichnet, dass der Staubfilter (18) der Luftbehandlungseinheiten (2) vor dem chemischen Filter (7) angeordnet ist.

6. Energiesparendes System nach einem de Ansprüche 1 bis 5, dadurch gekennzeichnet, dass in der Luftleitung (15) der Luftabzugseinheiten (5) vor dem biologischen Filter (16) ein Staubfilter (18) angeordnet ist.

7. Energiesparendes System nach einem der Ansprüche 1 bis 6, dadurch gekennzeichnet, dass die Nachheizeinheiten (10) an die Wärmepumpe (3) über Heizregler (11) angeschlossen sind.

8. Energiesparendes System nach einem der Ansprüche 1 bis 7, dadurch gekennzeichnet, dass in den Frischluftzuführungseinheiten (4) Vorheizeinheiten (13) vorgesehen sind, die an die Heizseite der Wärmepumpe (3) angeschlossen sind.

**Revendications**

1. Système économiseur d'énergie pour chauffer ou refroidir une installation d'étable, notamment une installation d'étable d'élevage d'animaux composée d'une pluralité d'enceintes destinées à loger un grand nombre d'animaux en vue de diminuer le risque de contagion des animaux logés dans les différentes enceintes, en cas d'apparition d'une maladie infectieuse, système comportant:

1) une unité de traitement de l'air (2) dans chacune des dites enceintes (1), appelée à traiter l'air dans l'enceinte intéressée et comprenant:

a) un condenseur d'humidité (8) pour condenser l'humidité formée dans l'enceinte intéressée (1);

b) au moins un filtre de dépoussiérage (18) pour éliminer les impuretés solides de l'air dans l'enceinte;

c) au moins un filtre chmique (7) pour réduire ou éliminer les impuretés gazeuses formées dans l'enceinte;

d) au moins une unité de réchauffage (10) pour échauffer l'air circulant dans l'enceinte;

2) dans chaque enceinte (1), une unité d'amenée d'air frai (4) pour amener de l'air frais de l'atmosphère vers l'intérieur de l'enceinte (1), ainsi que, dans chaque enceinte (1), une unité d'évacuation de l'air (5) pour évacuer l'air de l'enceinte (1) vers l'atmosphère,

dans lequel système la conduite d'air (15) de l'unité d'évacuation de l'air (5) est pourvue d'au moins un filtre biologique (16) pour la filtration biologique de l'air à évacuer vers l'atmosphère, cependant que les condenseurs d'humidité (8) des unités de traitement de l'air (2) disposées dans les différentes enceintes (1) sont reliés par le côté de refroidissement d'au moins une pompe de chaleur (3) à un circuit commun d'absorption de chaleur, et que les unités de réchauffage (10) des unités de traitement de l'air (2) sont reliées par l'intermédiaire du côté de réchauffage de ladite pompe de chaleur (3) à un circuit commun d'émission de chaleur.

2. Système économiseur d'énergie selon la revendication 1, caractérisé en ce que les filtres biologiques (16) sont formés d'un matériau filtrant imbibé ou imprégné d'un liquide stérilisant.

3. Système économiseur d'énergie selon la revendication 1 ou 2, caractérisé en ce que le filtre chimique (7) est interposé entre le condenseur d'humidité (5) et l'unité de réchauffage (10) de l'unité de traitement de l'air (2) ou en aval de l'unité de réchauffage (10).

4. Système économiseur d'énergie selon la revendication 1 ou 2, caractérisé en ce que le filtre chimique est formé d'un matériau filtrant imbibé ou revêtu d'humates.

5. Système économiseur d'énergie selon une des revendications 1 à 4, caractérisé en ce que le filtre de dépoussiérage (18) des unités de traitement de l'air (2) est disposé en amont du filtre chimique (7).

6. Système économiseur d'énergie selon une des revendications 1 à 5, caractérisé en ce que la conduite d'air (15) des unités d'évacuation de l'air (5) est pourvue d'un filtre de dépoussiérage (18) disposé en amont du filtre biologique (16).

7 . Système économiseur d'énergie selon une des revendications 1 à 6, caractérisé en ce que les unités de réchauffage (10) sont reliées à la pompe de chaleur (3) par l'intermédiaire de régulateurs de chauffage (11).

8. Système économiseur d'énergie selon une des revendications 1 à 7, caractérisé en ce que les unités d'amenée d'air frais (4) comportent des unités de préchauffage (13) reliées au côté de chauffage de la pompe de chaleur (3).

**Claims**

1. Energy saving system for heating and/or cooling of installations, particularly animal breeding installations, consisting of rooms intended to be used as living place for a plurality of animals, whereby the danger of spreading of infectious diseases among the animals all over several rooms is minimized within the system, comprising:

1) an air conditioning unit (2) within each room (1) for conditioning the air within each room, comprising:

a) a vapor condensor (8) to condensate the vapors becoming into existence within the room (1)

b) at least one dust filter (18) to eliminate atmospheric pollution consisting of dust parts within the room

c) at least one chemical fil ter (7) to minimize or eliminate the atmospheric pollution consisting of gases becoming into existence within the room

d) at least one secondary heating unit (10) to heat the air circulating within the room

2) a fresh-air supply unit (4) within each room (1) to supply fresh-air coming from atmosphere to the interior of room (1) and an air exhaust unit (5) to lead the air out of the room (1) into atmosphere,

whereby the air conduction (15) of the exhaust unit (4) comprises at least one biological filter (16) filtering the air biologically which is lead into atmosphere, and said vapor condensors (8) of the air conditioning unit (2) of each room, respectively, are coupled on the side of the cooler of at least one heat pump (3) with a common thermal removal cycle, and said secondary heat pumps (10) of the air conditioning units (2) are coupled on the heating side of the heat pump with a common heat output cycle.

2. Energy saving system according to claim 1, characterized in that the biological filters (16) consist of filter material saturated or impregnated with a germicide liquid.

3. Energy saving system according to claim 1 or 2, characterized in that the chemical filter (7) is disposed between the vapor condensor (8) and the secondary heating unit (10) of the air conditioning unit (2) or behind the secondary heating unit (10).

4. Energy saving system according to claim 1 or 2, characterized in that the chemcial filter consists of filter material saturated or coated with humates.

5. Energy saving system according to one of claims 1 through 4, characterized in that the dust filters (18) of the air conditioning units (2), respectively, are disposed before the chemical filters (7).

6. Energy saving system according to one of claims 1 through 5, characterized in that within the air conductions (15) of the air exhaust units (5), respectively, a dust filter (18) is disposed before the biological filter (16).

7. Energy saving system according to one of claims 1 through 6, characterized in that the secondary heating unit (10) is coupled with the heat pump (3) by means of a heat controller (11).

8. Energy saving system according to one of claims 1 through 7, characterized in that the fresh-air supply units (4) comprise preheating units (13) which are coupled on the heating side of the heat pump.

Fig.1

A–A

Fig.2

C–C

Fig.4

B–B

Fig.3

Fig.5

Fig.6

0 181 910